# EUROPÄISCHE PATENTANMELDUNG

(11) **EP 4 682 094 A1**
(43) Veröffentlichungstag der Anmeldung: **21.01.2026**
(21) Anmeldenummer: 25187930.0
(22) Anmeldetag: 07.07.2025
(51) Int. Cl.: B65G 49/06, C03B 33/02

(54) **EINRICHTUNG UND VERFAHREN ZUM UNABHÄNGIGEN TRANSPORTIEREN VON ZWEI GLASSCHEIBEN IN EINER SCHEIBENBEARBEITUNGSVORRICHTUNG**

(30) Priorität: 19.07.2024 DE 102024120653
(71) Anmelder: Glaston Germany GmbH, 75242 Neuhausen-Hamberg (DE)
(72) Erfinder: Neff, Tobias, 75328 Schömberg (DE); Risle, Uwe, 75387 Neubulach (DE)
(74) Vertreter: Twelmeier Mommer & Partner

(57) **Zusammenfassung**

Beschrieben wird eine Transporteinrichtung und ein Verfahren zum Transportieren von stehenden Glasscheiben (7, 8) in einer Scheibenbearbeitungsvorrichtung (1). Ein erster Horizontalförderer (11) ist im unteren Bereich der Stützwand (4) angeordnet und bildet eine nach oben weisende erste Förderfläche (13). Ein zweiter Horizontalförderer (12) ist mit dem ersten Horizontalförderer (11) in einer Linie angeordnet und bildet eine nach oben weisende zweite Förderfläche (14). Eine Saugfördereinrichtung (15) enthält ein gelochtes Saugband (16). Ein Abschnitt des Saugbandes (16) läuft über eine Unterdruckkammer (22), um eine Glasscheibe (7) an das Saugband (16) anzusaugen. Dieser Abschnitt des Saugbandes (16) verläuft in der Stützebene (5) parallel zur Förderrichtung (B) aus einem Bereich oberhalb der ersten Förderfläche (13) bis in einen Bereich oberhalb der zweiten Förderfläche (14). Erfindungsgemäß ist vorgesehen, dass die Transporteinrichtung (2) eingerichtet ist, die zweite Förderfläche (14) synchron mit der ersten Förderfläche (13) oder unabhängig von der ersten Förderfläche (13) zu bewegen, und dass ein relativ zur Stützwand (4) bewegbarer Abstandhalter (26) in dem Bereich oberhalb der zweiten Förderfläche (14) angeordnet ist, welcher in eine Arbeitsposition bewegbar ist, in welcher sich eine Führungsfläche (31) des Abstandhalters (26) auf der der Unterdruckkammer (22) gegenüberliegenden Seite der Stützebene (5) befindet.

## Beschreibung

Die Erfindung geht von einer Transporteinrichtung mit den Merkmalen des Oberbegriffs des Anspruchs 1 aus. Derartige Transporteinrichtungen sind durch vielfältigen Einsatz in der Praxis bekannt und haben sich grundsätzlich bewährt, wenn eine Glasscheibe nach der anderen in die Scheibenbearbeitungsvorrichtung hineintransportiert, bearbeitet und wieder heraustransportiert wird. Die in der Praxis eingesetzten Scheibenbearbeitungsvorrichtungen, beispielsweise Vorrichtungen zum Auftragen eines Abstandhalterbandes auf eine Glastafel, sind in ihrer Größe vor allem an eine Maximalgröße von Glasscheiben angepasst, welche noch auf der Vorrichtung bearbeitet werden kann. Wenn auf einer solchen Vorrichtung dann auch Scheiben kleinerer Abmessungen bearbeitet werden, kann dies dazu führen, dass eine erhebliche Zeit dafür benötigt wird, eine relativ kleine Glasscheibe über relativ lange Strecken in die Vorrichtung hinein und aus der Vorrichtung heraus zu transportieren.

Der vorliegenden Erfindung liegt die Aufgabe zugrunde, eine Vorrichtung der eingangs genannten Art zu verbessern und die Menge der Glasscheiben zu erhöhen, welche in einer vorgegebenen Zeit bearbeitet werden können. Der Erfindung liegt ferner die Aufgabe zugrunde, ein entsprechendes Verfahren zu schaffen.

Die Aufgabe wird durch eine Transporteinrichtung mit den Merkmalen des Anspruchs 1 und ein Verfahren mit den Merkmalen des Anspruchs 10 gelöst. Vorteilhaft Weiterbildungen sind Gegenstand von Unteransprüchen.

Die erfindungsgemäße Transporteinrichtung ist eingerichtet, um aufrecht stehende Glasscheiben in einer Scheibenbearbeitungsvorrichtung zu transportieren. Die Scheibenbearbeitungsvorrichtung enthält eine Bearbeitungseinrichtung, welche entlang einer Stützebene, die von einer Stützwand für die Glasscheiben gebildet wird, nach oben und unten bewegbar ist. Eine Glasscheibe im Sinne der vorliegenden Erfindung kann eine einzelne Glastafel, eine aus mehreren Glastafeln zusammengesetzte Baugruppe oder eine Isolierglasscheibe sein. Eine Scheibenbearbeitungsvorrichtung im Sinne der vorliegenden Erfindung kann eine Vorrichtung zum Auftragen eines flexiblen Abstandhalterstrangs auf eine Glasscheibe sein. Die Bearbeitungseinrichtung kann als Applikationskopf ausgestaltet sein, welcher wenigstens an einem Abschnitt des Randes der Glasscheibe entlanggeführt wird, um den Abstandhalterstrang zu applizieren. Mit der Bearbeitungseinrichtung kann in an sich bekannter Weise auf eine stehende Glastafel entlang ihres Randes ein flexibler Abstandhalterstrang aufgetragen werden. Durch einen entlang des gesamten Randes der Glastafel aufgetragenen Abstandhalterstrang wird ein Abstandhalterrahmen gebildet, um zwei benachbarte Glastafeln in einer fertigen Isolierglasscheibe auf Abstand zu halten. Der flexible Abstandhalterstrang kann ein pastöser und sich sodann verfestigender Abstandhalterstrang aus einem thermoplastischen Material und/oder einem reaktiv vernetzenden Material sein, welches mithilfe einer Düse auf die Glastafel appliziert wird. Der flexible Abstandhalterstrang kann ferner als bandförmiges Material von einer Vorratsrolle abgerollt und auf die Glastafel appliziert werden. Eine Scheibenbearbeitungsvorrichtung kann auch eine an sich bekannte Vorrichtung zum Versiegeln einer Randfuge einer Isolierglasscheibe sein.

Die Transporteinrichtung enthält einen ersten Horizontalförderer, einen zweiten Horizontalförderer und eine Saugfördereinrichtung. Der erste Horizontalförderer ist im unteren Bereich der Stützwand angeordnet. Der erste Horizontalförderer bildet eine nach oben weisende erste Förderfläche. Die erste Förderfläche ist zum Transport einer auf der Förderfläche stehenden Glasscheibe entlang einer horizontalen Förderrichtung linear bewegbar. Der zweite Horizontalförderer ist mit dem ersten Horizontalförderer in einer Linie angeordnet. Es handelt sich somit um eine einspurige Scheibenbearbeitungsvorrichtung. Der zweite Horizontalförderer bildet eine nach oben weisende zweite Förderfläche. Die zweite Förderfläche ist ebenfalls entlang der Förderrichtung linear bewegbar.

Jede Förderfläche kann durch ein Förderband und/oder eine Rollenbahn gebildet werden. Jede Förderfläche bildet also eine nach oben orientierte Aufstandsfläche für eine aufrecht stehende Glasscheibe, welche sich an der Stützwand abstützen kann. Jede Förderfläche kann eine stehende Glasscheibe an deren unteren Rand tragen. Die Stützwand bildet eine parallel zur Förderrichtung verlaufende Stützebene. Die Stützebene kann in an sich bekannter Weise, beispielsweise durch eine Anordnung aus einer Vielzahl von Luftdüsen und/oder Rollen, gebildet werden. Die Stützwand kann zwei voneinander beabstandete Teile aufweisen, deren Abstand zueinander einen Freiraum für die Bewegung der Bearbeitungseinrichtung bereitstellt. Mit der Eigenschaft "aufrecht" ist gemeint, dass die Stützwand und die von ihr gebildete Stützebene nicht exakt vertikal bzw. lotrecht steht, sondern um einige Grad nach hinten geneigt ist, damit eine aufrecht stehende und sich an die Stützwand anlehnende Glastafel nicht nach vorne, also von der Stützwand weg, umkippt. Die Stützebene der Stützwand kann eine Neigung von etwa 6° bis 8° zur Vertikalen aufweisen.

Die Saugfördereinrichtung enthält ein gelochtes Saugband. Das Saugband enthält mehrere Saugöffnungen und wird über eine mit Unterdruck beaufschlagte Kammer geführt. Der über die Unterdruckkammer laufende Abschnitt des Saugbandes erstreckt sich in der Stützebene und parallel zu der Förderrichtung der Horizontalförderer. Dabei kann eine der Unterdruckkammer abgewandte Oberfläche des Saugbandes koplanar zu der Stützebene sein. Die Unterdruckkammer und damit auch der besaugte Abschnitt des Saugbandes erstrecken sich aus einem Bereich oberhalb der ersten Förderfläche bis in einen Bereich oberhalb der zweiten Förderfläche. Eine vom ersten Horizontalförderer auf den zweiten Horizontalförderer (und umgekehrt) zu transportierende Glasscheibe kann gleichzeitig von der Saugfördereinrichtung angesaugt werden. Die Transporteinrichtung ist in einer Weise ausgebildet und eingerichtet, die beiden Förderflächen synchron zueinander, also mit der gleichen Geschwindigkeit entlang der Förderrichtung, zu bewegen. Die Saugfördereinrichtung kann den Transport einer Glasscheibe von dem einen auf den anderen Horizontalförderer unterstützen. In einem solchen Fall werden die erste Förderfläche, die zweite Förderfläche und das Saugband alle mit derselben Geschwindigkeit bewegt. Insbesondere kann mit der Saugfördereinrichtung verhindert werden, dass eine relativ kleine Glasscheibe in eine Lücke hineinfällt, welche zwischen den beiden Horizontalförderern den erforderlichen Platz bereitstellt, um die Bearbeitungseinrichtung bis in einen Bereich unterhalb der Förderfläche abzusenken. Ein synchron von den beiden Horizontalförderer und der Saugeinrichtung durchgeführter Transport der Glasscheibe kann insbesondere durchgeführt werden, wenn von der Bearbeitungseinrichtung in an sich bekannter Weise ein Abstandhalterstrang entlang des unteren oder des oberen Randes einer Glasscheibe appliziert wird. Sowohl der erste Horizontalförderer, der zweite Horizontalförderern als auch die Saugfördereinrichtung können jeweils einen steuerbaren Antrieb enthalten. Die Transporteinrichtung kann eine zentrale Steuereinrichtung zur Ansteuerung der Antriebe mit jeweils einer vordefinierten Geschwindigkeit enthalten.

Die erfindungsgemäße Transporteinrichtung ist außerdem eingerichtet, die zweite Förderfläche unabhängig von der ersten Förderfläche zu bewegen, insbesondere gemäß dem erfindungsgemäßen Verfahren.

Bei dem erfindungsgemäßen Verfahren zum unabhängigen Transportieren von zwei Glasscheiben in einer Scheibenbearbeitungsvorrichtung steht eine erste Glasscheibe leicht geneigt auf dem ersten Horizontalförderer. Die erste Glasscheibe stützt sich an der Stützwand ab und wird an die Saugfördereinrichtung angesaugt. Die erste Glasscheibe wird von der Saugfördereinrichtung und dem ersten Horizontalförderer gemeinsam mit einer ersten Geschwindigkeit entlang der horizontalen Förderrichtung linear transportiert. Eine zweite Glasscheibe steht leicht geneigt auf dem zweiten Horizontalförderer. Die zweite Glasscheibe wird von einem Abstandhalter beabstandet zu der Saugfördereinrichtung positioniert und dabei von dem zweiten Horizontalförderer mit einer zweiten Geschwindigkeit entlang der Förderrichtung linear transportiert. Die zweite Geschwindigkeit unterscheidet sich von der ersten Geschwindigkeit. Eine der Geschwindigkeiten kann auch Null sein. Eine der beiden Glasscheiben kann also stillstehen, während die andere Glasscheibe horizontal bewegt wird. Der Abstandhalter kann die zweite Glasscheibe in einem Abstand zu dem besaugten Abschnitt des Saugbandes positionieren, und insbesondere in dieser Position während ihres Transports führen. Der Abstandhalter ist relativ zu der Stützwand bewegbar in der Transporteinrichtung angeordnet. Der Abstandhalter ist der zweiten Förderfläche zugeordnet. Der Abstandhalter ist in dem Bereich oberhalb der zweiten Förderfläche angeordnet. Der Abstandhalter ist in eine Arbeitsposition bewegbar, in welcher sich eine Führungsfläche des Abstandhalters auf der der Unterdruckkammer gegenüberliegenden Seite des Saugbandes befindet. Die Führungsfläche befindet sich dann auf der der Unterdruckkammer gegenüberliegenden Seite der Stützebene.

Die Erfindung hat wesentliche Vorteile:
- Mit Hilfe der Erfindung, insbesondere aufgrund des der Saugfördereinrichtung zugeordneten Abstandhalters, wird es möglich, in der Scheibenbearbeitungsvorrichtung zwei Glasscheiben unabhängig voneinander zu transportieren.
- Der Abstandhalter kann verhindern, dass die zweite Glasscheibe ebenfalls von dem Saugband angesaugt wird. Deshalb kann diese mit einer anderen Geschwindigkeit als das Saugband und die erste Glasscheibe bewegt werden.
- Es wird möglich, auf dem zweiten Horizontalförderer bereits die zweite Glasscheibe in die Scheibenbearbeitungsvorrichtung hinein zu transportieren, sobald die erste Glasscheibe die zweite Förderfläche verlassen hat. Wenn die erste Glasscheibe die zweite Förderfläche verlassen hat, befindet sie sich noch im Bereich der Bearbeitungseinrichtung. Die erste Glasscheibe kann von der Saugfördereinrichtung und dem ersten Horizontalförderer in der erforderlichen Geschwindigkeit weiterbewegt werden, um deren Bearbeitung abzuschließen. Die erste Glasscheibe kann auch gestoppt werden, beispielsweise um von unten nach oben einen Abstandhalterstrang an deren hinteren Rand zu applizieren.

- Es kann insgesamt Zeit eingespart werden, da die der ersten Glasscheibe nachfolgende zweite Glasscheibe bereits in die Scheibenbearbeitungsvorrichtung hineingefördert und bis kurz vor die Bearbeitungseinrichtung transportiert werden kann, während sich die erste Glasscheibe noch in Bearbeitung befindet. Insbesondere bei einer relativ großen Scheibenbearbeitungsvorrichtung, bei welcher der zweite Horizontalförderer eine relativ große Länge aufweist, kann diese Zeitersparnis relativ groß sein.
- Durch die Erfindung lässt sich die Taktzeit zur Bearbeitung von Glasscheiben verringern. Es können also mehr Glasscheiben in einer vorgegebenen Zeit bearbeitet werden.
- Besonders viel Zeit lässt sich einsparen, während in einer Scheibenbearbeitungsvorrichtung oder in einer Fertigungslinie, in welche die Scheibenbearbeitungsvorrichtung integriert ist, Glasscheiben verarbeitet werden, welche kleiner sind als die Maximalgröße von Glasscheiben, für welche die Scheibenbearbeitungsvorrichtung bzw. die Fertigungslinie ausgelegt ist.

In weiterer Ausgestaltung kann die Führungsfläche des Abstandhalters durch wenigstens eine Führungsrolle und/oder wenigstens eine Luftdüse gebildet werden. Der Abstandhalter kann unterhalb oder oberhalb der Saugfördereinrichtung angeordnet sein. Der Abstandhalter kann quer zur Stützebene hin und her bewegbar sein, insbesondere zwischen einer Ruheposition und seiner Arbeitsposition. Der Abstandhalter kann sich in seiner Ruheposition auf derselben Seite der Stützebene wie die Unterdruckkammer befinden. Eine entlang der Förderrichtung gemessene Stützlänge des Abstandhalters kann größer oder gleich der Länge eines Abschnitts des Saugbandes sein, welcher in der Stützebene oberhalb der zweiten Förderfläche verläuft.

In weiterer Ausgestaltung kann in dem Bereich oberhalb der ersten Förderfläche ein weiterer Abstandhalter angeordnet sein. Das erfindungsgemäße Verfahren lässt sich dadurch entgegen der Förderrichtung durchführen. Nach Abschluss der Bearbeitung der ersten Glasscheibe kann diese durch den oberhalb der ersten Förderfläche befindlichen Abstandhalter beabstandet zu der Saugfördereinrichtung positioniert werden, sodass die nachfolgende zweite Glastafel an das Saugband angesaugt werden kann. Die Bearbeitung der zweiten Glastafel durch die Bearbeitungseinrichtung kann begonnen werden, bevor die erste Glasscheibe durch den ersten Horizontalförderer aus der Scheibenbearbeitungsvorrichtung heraustransportiert wurde. Dadurch lässt sich insgesamt weitere Zeit einsparen. Die Stützlänge des Abstandhalters kann größer oder gleich der Länge eines Abschnitts des Saugbandes sein, welcher in der Stützebene oberhalb derjenigen Förderfläche verläuft, dem dieser Abstandhalter zugeordnet ist.

In weiterer Ausgestaltung des Verfahrens kann die zweite Glasscheibe von einem Rückpositionierer in die Stützebene zurückgeführt werden. Der Rückpositionierer kann eine Gegendruckeinrichtung sein, mit dessen Hilfe die zweite Glasscheibe an das Saugband zurückgedrückt wird. Dadurch kann sichergestellt werden, dass die zweite Glasscheibe dann, wenn sie von der Saugfördereinrichtung angesaugt werden soll, auch sicher an das Saugband angesaugt wird. Der Rückpositionierer ist in der Transporteinrichtung enthalten und relativ zur Stützwand bewegbar. Sowohl in dem Bereich oberhalb der ersten Förderfläche als auch in dem Bereich oberhalb der zweiten Förderfläche kann jeweils ein Rückpositionierer angeordnet sein. Der Abstandhalter und/oder der Rückpositionierer können jeweils eine Rollenleiste mit mehreren frei drehbar angeordneten Führungsrollen umfassen. Die äußere Umfangsfläche der Führungsrollen bildet dann die Führungsfläche des Abstandhalters bzw. des Rückpositionierers. Die Führungsrollen der Rollenleiste können entlang einer geraden Linie angeordnet sein, welche parallel zur Stützebene verläuft. Alle Führungsrollen einer Rollenleiste können denselben Außendurchmesser aufweisen. Eine Rollenleiste kann eine einfache und zuverlässige Umsetzung des Abstandhalters und/oder des Rückpositionierers ermöglichen.

Weitere Einzelheiten und Vorteile der Erfindung werden an Ausführungsbeispielen der Erfindung unter Bezugnahme auf die beigefügten Zeichnungen erläutert. Gleiche und einander entsprechende Komponenten sind darin mit übereinstimmenden Bezugszeichen versehen. Es zeigen:
- Figur 1: eine perspektivische Darstellung einer schematischen Scheibenbearbeitungsvorrichtung mit einem ersten Ausführungsbeispiel einer erfindungsgemäßen Transporteinrichtung,
- Figur 2: einen Ausschnitt der Figur 1 in vergrößerter Darstellung,
- Figur 3: die Transporteinrichtung der Figur 1 in vergrößerter Darstellung,
- Figur 4: eine schematische Seitenansicht der Scheibenbearbeitungsvorrichtung der Figur 1 mit einem Abstandhalter in Arbeitsposition und einem Rückpositionierer in Ruheposition,
- Figur 5: eine Ansicht ähnlich Figur 4 mit dem Abstandhalter in Ruheposition und dem Rückpositionierer in Arbeitsposition,
- Figur 6: eine Ansicht ähnlich Figur 4, wobei sich Abstandhalter und Rückpositionierer in Ruheposition befinden,
- Figur 7: eine Ansicht ähnlich Figur 2 auf ein zweites Ausführungsbeispiel einer erfindungsgemäßen Transporteinrichtung,
- Figur 8: eine schematische Seitenansicht der Figur 7 mit einem Abstandhalter in Arbeitsposition und einem Rückpositionierer in Ruheposition,
- Figur 9: eine Ansicht ähnlich Figur 8 mit dem Abstandhalter in Ruheposition und dem Rückpositionierer in Arbeitsposition,
- Figur 10: eine Ansicht ähnlich Figur 8, wobei sich Abstandhalter und Rückpositionierer in Ruheposition befinden.

Eine Scheibenbearbeitungsvorrichtung 1 enthält eine Transporteinrichtung 2, eine Bearbeitungseinrichtung 3 und eine Stützwand 4. Die Stützwand 4 enthält zwei Teile 4a und 4b, welche einen Abstand 4c zueinander aufweisen. Die Stützwand 4 bildet in an sich bekannter Weise eine Stützebene 5, die zur Vertikalen leicht geneigt angeordnet ist. Die Bearbeitungseinrichtung 3 enthält eine Düse 6 zum Applizieren eines Abstandhalterstrangs (nicht dargestellt) auf Glasscheiben 7, 8 und ist hierzu entlang einer Führungsschiene 9 entlang des Doppelpfeils A nach oben und unten verschiebbar. Die Führungsschiene 9 erstreckt sich parallel zur Stützebene 5.

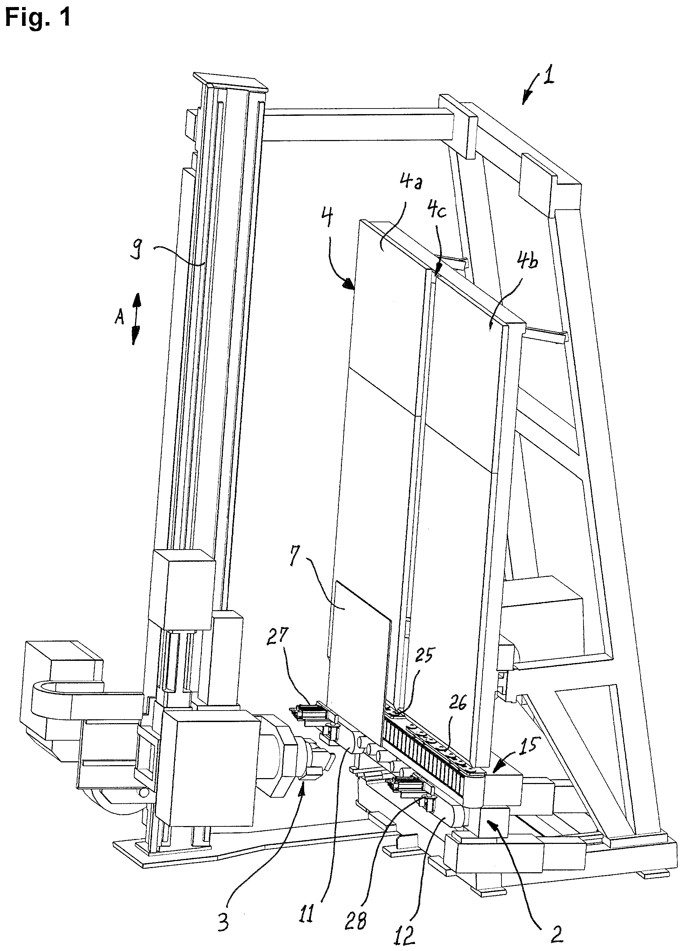

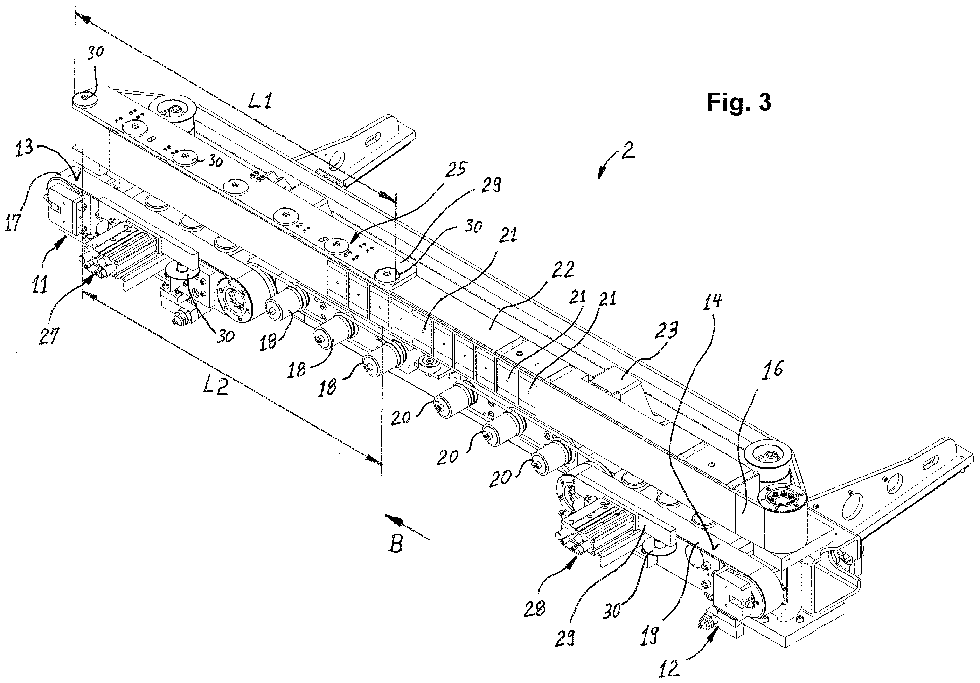

Die Transporteinrichtung 2 enthält einen ersten Horizontalförderer 11 mit einer ersten Förderfläche 13 und einen zweiten Horizontalförderer 12 mit einer zweiten Förderfläche 14 sowie eine Saugfördereinrichtung 15 mit einem Saugband 16, siehe insbesondere Figur 3. Die Förderfläche 13 wird von einem Förderband 17 und drei Transportrollen 18 gebildet und ist durch einen nicht dargestellten Antrieb bewegbar. Die Förderfläche 14 wird von einem Förderband 19 und drei Transportrollen 20 gebildet und ist ebenfalls durch einen nicht dargestellten Antrieb bewegbar. Eine erste Glasscheibe 7 steht leicht geneigt auf der ersten Förderfläche 13 und stützt sich an der Stützwand 4 ab, vgl. Figur 1. Die Glasscheibe 7 wurde durch Bewegung der Förderflächen 13, 14 entlang einer horizontalen Förderrichtung B in die Scheibenbearbeitungsvorrichtung 1 hineintransportiert, vgl. Figur 1. Das Saugband 16 enthält eine Vielzahl von Durchgangslöchern 21 und wird endlos über eine Unterdruckkammer 22 geführt. Einige der Durchgangslöcher 21 sind in Figur 3 dargestellt. Die Unterdruckkammer 22 erstreckt sich aus einem Bereich oberhalb der ersten Förderfläche 13 bis in einen Bereich oberhalb der zweiten Förderfläche 14. Das Saugband 16 ist durch einen nicht dargestellten Antrieb über die Unterdruckkammer 22 bewegbar. Die Unterdruckkammer 22 wird über einen Unterdruckanschluss 23 mit Unterdruck versorgt. Der durch die Unterdruckkammer 22 besaugte Abschnitt 24 des Saugbandes 16 verläuft in der Stützebene 5 und parallel zur Förderrichtung B und kann die Glasscheibe 7 in an sich bekannter Weise ansaugen.

Zum Applizieren eines Abstandhalterstrangs (nicht dargestellt) auf die Glasscheibe 7 wird die Düse 6 am Rand der Glasscheibe 7 entlanggeführt. Zum Applizieren entlang des vorderen und des hinteren Randes wird die Bearbeitungseinrichtung 3 in Richtung A verschoben. Zum Applizieren entlang des oberen und unteren Randes wird die Glasscheibe 7 durch die synchron bewegten Horizontalförderer 11 und 12 und die Saugfördereinrichtung 15 in Förderrichtung B oder entgegen der Förderrichtung B an der stillstehenden Bearbeitungseinrichtung 3 vorbeitransportiert. Ein derartiges Applizieren eines Abstandhalterstrangs ist an sich bekannt und braucht deshalb nicht näher beschrieben zu werden.

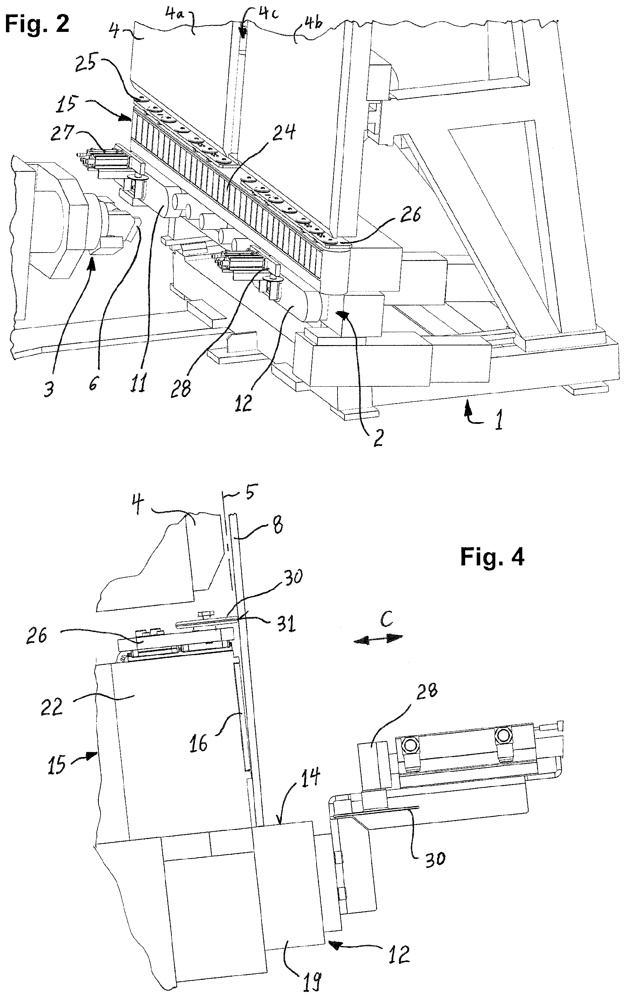

Die Transporteinrichtung 2 enthält einen ersten Abstandhalter 25, einen zweiten Abstandhalter 26, einen ersten Rückpositionierer 27 und einen zweiten Rückpositionierer 28. Die Abstandhalter 25, 26 sowie die Rückpositionierer 27, 28 sind jeweils als Rollenleiste 29 ausgestaltet und enthalten jeweils mehrere frei drehbar angeordnete Führungsrollen 30, vgl. Figur 3. Die Abstandhalter 25, 26 sowie die Rückpositionierer 27, 28 sind entlang einer quer zur Stützebene 5 orientierten Bewegungsrichtung C jeweils zwischen einer Ruheposition und einer Arbeitsposition hin und her bewegbar, vgl. Figuren 4 bis 6. Bei diesem ersten Ausführungsbeispiel sind die Abstandhalter 25 und 26 oberhalb der Saugfördereinrichtung 15 angeordnet. Die Stützlänge L1 des ersten Abstandhalters 25, entlang der Förderrichtung B gemessen, ist größer als die Länge L2 eines Abschnitts des Saugbandes 16, welcher in der Stützebene 5 oberhalb derjenigen Förderfläche 13 verläuft, dem dieser Abstandhalter 25 zugeordnet ist.

Wenn die Bearbeitung der ersten Glasscheibe 7 nahezu beendet ist und die Glasscheibe 7 die Förderfläche 14 in Förderrichtung B verlassen hat, ist es zum Fertigstellen der Bearbeitung ausreichend, die Glasscheibe 7 nur noch durch die Förderfläche 12 und das Saugband 16 zu transportieren. Auch zum Heraustransportieren der fertig bearbeiteten Glasscheibe 7 aus der Scheibenbearbeitungsvorrichtung 1 in Förderrichtung B bedarf es des zweiten Horizontalförderers 12 nicht mehr. Die zweite Förderfläche 14 braucht folglich auch nicht mehr synchron mit der Förderfläche 12 und dem Saugband 16 bewegt zu werden. Stattdessen wird die Förderfläche 14 unabhängig bewegt, nachdem die erste Glasscheibe 7 die Förderfläche 14 verlassen hat. Bevor die Bearbeitung der ersten Glasscheibe 7 fertiggestellt ist, kann so eine zweite Glastafel 8 in die Scheibenbearbeitungsvorrichtung 1 hineintransportiert werden, vgl. Figur 4. Der Abstandhalter 26 wird hierzu in seine Arbeitsposition gemäß Figur 4 bewegt, in welcher sich die durch die Umfangsflächen der Führungsrollen 30 gebildete Führungsfläche 31 des Abstandhalters 26 auf der der Unterdruckdruckkammer 22 gegenüberliegenden Seite des Saugbandes 16 bzw. der Stützebene 5 befindet.

Ein Abschnitt der Stützebene 5 wird durch die Oberfläche des Saugbandes 16 gebildet. Die auf der Förderfläche 14 stehende Glastafel 8 wird somit beim Transport durch den Horizontalförderer 12 in einem Abstand zum Saugband 16 geführt. Dadurch wird die Glastafel 8 nicht an das Saugband 16 angesaugt und kann mit einer anderen Geschwindigkeit als das Saugband 16 transportiert werden.

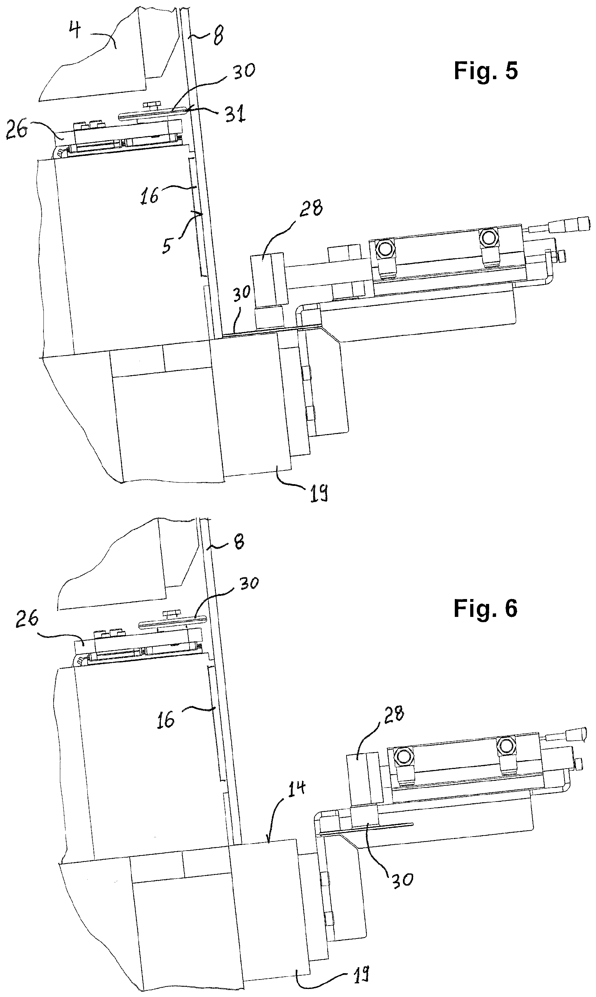

Wenn die Bearbeitung der ersten Glasscheibe 7 abgeschlossen ist, kann die Glasscheibe 7 allein von dem ersten Horizontalförderer 11 aus der Scheibenbearbeitungsvorrichtung 1 heraustransportiert werden. Der Unterdruck in der Unterdruckkammer 22 wird abgeschaltet und der Abstandhalter 25 wird in seine Arbeitsposition bewegt, sodass die Glasscheibe 7 nicht mehr an das Saugband 16 angesaugt wird. Dann wird der Unterdruck in der Unterdruckkammer 22 wieder eingeschaltet. Nun wird der Abstandhalter 26 in seine Ruheposition zurückbewegt, vgl. Figur 5. Gleichzeitig wird der Rückpositionierer 28 in seine Arbeitsposition vorgeschoben, vgl. Figur 5, um sicherzustellen, dass sich die zweite Glasscheibe 8 wieder in die Stützebene 5 zurückbewegt und dort sicher vom Saugband 16 angesaugt wird. Nun kann die zweite Glasscheibe 8 durch den Horizontalförderer 12 und die Saugfördereinrichtung 15 transportiert werden, sodass die Bearbeitung der Glasscheibe 8 durch die Bearbeitungseinrichtung 3 beginnen kann. Dabei können sich Abstandhalter 26 und Rückförderer 28 jeweils in ihrer Ruheposition befinden, vgl. Figur 6. Wenn die erste Glasscheibe 7 vollständig aus der Scheibenbearbeitungsvorrichtung 1 heraustransportiert wurde und die Förderfläche 13 verlassen hat, wird die Förderfläche 13 wieder synchron mit der Förderfläche 14 und dem Saugband 16 bewegt, um die vom zweiten Horizontalförderer 12 kommende zweite Glasscheibe 8 zu übernehmen.

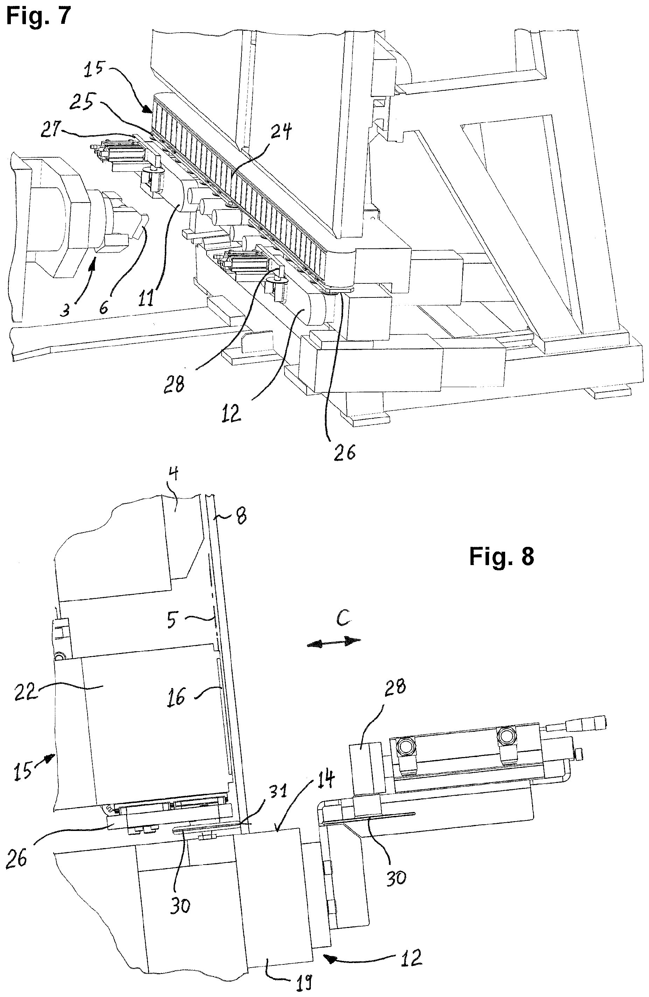

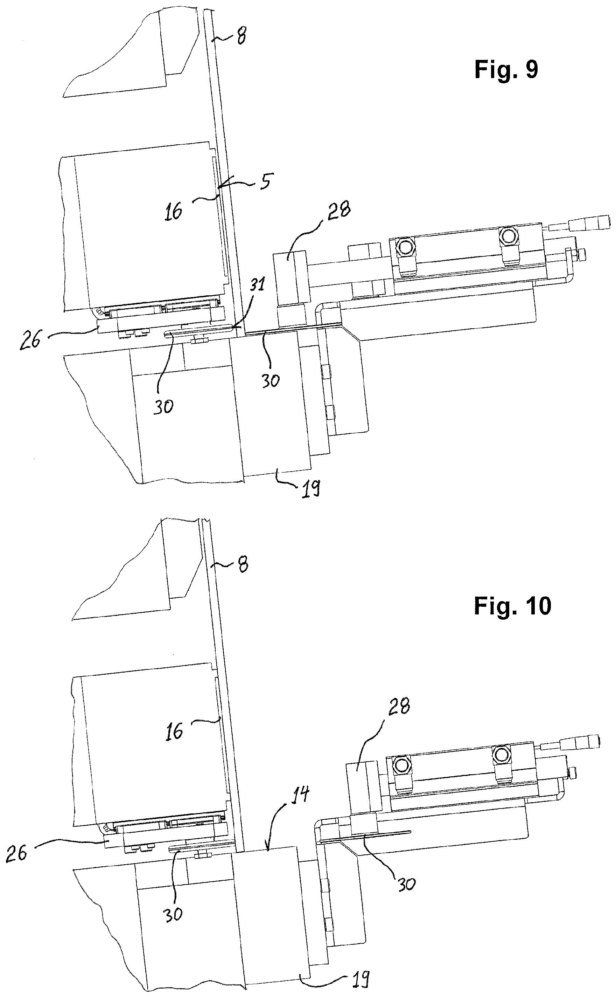

Bei einem zweiten Ausführungsbeispiel gemäß der Figuren 7 bis 10 sind die Abstandhalter 25 und 26 unterhalb der Saugfördereinrichtung 15 angeordnet. Im Übrigen ist die Scheibenbearbeitungsvorrichtung 1 in gleicher Weise wie beim ersten Ausführungsbeispiel ausgestaltet, sodass zur Vermeidung von Wiederholungen auf die vorstehende Beschreibung verwiesen wird. Der in seiner Arbeitsposition befindliche Abstandhalter 26 gemäß Figur 8 führt die Glasscheibe 8 in einem Abstand zu dem Saugband 16, sodass die Glasscheibe 8 von der Saugfördereinrichtung 15 nicht angesaugt wird und mit Hilfe der Förderfläche 14 unabhängig von der Geschwindigkeit des Saugbandes 16 transportiert werden kann. Wenn die Bearbeitung der ersten Glasscheibe 7 abgeschlossen ist und sich der Abstandhalter 25 in seiner Arbeitsposition befindet, wird der Abstandhalter 26 in seine Ruheposition, vgl. Figur 9, zurückbewegt. Gleichzeitig wird der Rückpositionierer 28 in seine Arbeitsposition bewegt, vgl. Figur 9. Nachdem der Rückpositionierer 28 die Glasscheibe 8 wieder in die Stützebene 5 zurückgeführt hat, sodass sie an dem Saugband 16 anliegt, wird der Rückpositionierer 28 wieder in seine Ruheposition zurückbewegt, vgl. Figur 10. Im Übrigen wird in gleicher Weise wie beim ersten Ausführungsbeispiel vorgegangen, sodass zur Vermeidung von Wiederholungen auf die dortige Beschreibung verwiesen wird.

### Bezugszeichenliste

| | | | |
|---|---|---|---|
| 1 | Scheibenbearbeitungsvorrichtung | 31 | Führungsfläche |
| 2 | Transporteinrichtung | | |
| 3 | Bearbeitungseinrichtung | A | Verschieberichtung |
| 4 | Stützwand | B | Förderrichtung |
| 4a | Teil der Stützwand | C | Bewegungsrichtung |
| 4b | Teil der Stützwand | L1 | Stützlänge Abstandhalter |
| 4c | Abstand | L2 | Länge Saugbandabschnitt |
| 5 | Stützebene | | |
| 6 | Düse | | |
| 7 | Glasscheibe | | |
| 8 | Glasscheibe | | |
| 9 | Führungsschienen | | |
| 11 | erster Horizontalförderer | | |
| 12 | zweiter Horizontalförderer | | |
| 13 | erste Förderfläche | | |
| 14 | zweite Förderfläche | | |
| 15 | Saugfördereinrichtung | | |
| 16 | Saugband | | |
| 17 | Förderband | | |
| 18 | Transportrollen | | |
| 19 | Förderband | | |
| 20 | Transportrollen | | |
| 21 | Durchgangslöcher | | |
| 22 | Unterdruckkammer | | |
| 23 | Unterdruckanschluss | | |
| 24 | besaugter Abschnitt | | |
| 25 | erster Abstandhalter | | |
| 26 | zweiter Abstandhalter | | |
| 27 | erster Rückpositionierer | | |
| 28 | zweiter Rückpositionierer | | |
| 29 | Rollenleiste | | |
| 30 | Führungsrollen | | |

## Patentansprüche

1. Transporteinrichtung (2) zum Transportieren von aufrecht stehenden Glasscheiben (7, 8) in einer Scheibenbearbeitungsvorrichtung (1) mit einer Bearbeitungseinrichtung (3), welche entlang einer von einer Stützwand (4) gebildeten Stützebene (5) nach oben und unten bewegbar ist,
wobei die Transporteinrichtung (2) wie folgt ausgestaltet ist:
• ein erster Horizontalförderer (11) ist im unteren Bereich der Stützwand (4) angeordnet und bildet eine nach oben weisende erste Förderfläche (13), welche zum Transport einer auf der Förderfläche (13) stehenden Glasscheibe (7) entlang einer horizontalen Förderrichtung (B) linear bewegbar ist,
• ein zweiter Horizontalförderer (12) ist mit dem ersten Horizontalförderer (11) in einer Linie angeordnet und bildet eine nach oben weisende zweite Förderfläche (14), welche entlang der Förderrichtung (B) linear bewegbar ist,
• eine Saugfördereinrichtung (15) enthält ein gelochtes Saugband (16),
• ein Abschnitt des Saugbandes (16) läuft über eine Unterdruckkammer (22), um eine Glasscheibe (7) an das Saugband (16) ansaugen zu können,
• dieser Abschnitt des Saugbandes (16) erstreckt sich in der Stützebene (5) parallel zur Förderrichtung (B) aus einem Bereich oberhalb der ersten Förderfläche (13) bis in einen Bereich oberhalb der zweiten Förderfläche (14),
**dadurch gekennzeichnet,**
**dass** die Transporteinrichtung (2) eingerichtet ist, die zweite Förderfläche (14) synchron mit der ersten Förderfläche (13) oder unabhängig von der ersten Förderfläche (13) zu bewegen, und
**dass** ein relativ zur Stützwand (4) bewegbarer Abstandhalter (26) in dem Bereich oberhalb der zweiten Förderfläche (14) angeordnet ist, welcher in eine Arbeitsposition bewegbar ist, in welcher sich eine Führungsfläche (31) des Abstandhalters (26) auf der der Unterdruckkammer (22) gegenüberliegenden Seite des Saugbandes (16) befindet.

2. Transporteinrichtung nach Anspruch 1, in welcher in dem Bereich oberhalb der ersten Förderfläche (13) ein weiterer Abstandhalter (25) angeordnet ist.

3. Transporteinrichtung nach einem der vorstehenden Ansprüche, in welcher eine entlang der Förderrichtung (B) gemessene Stützlänge (L1) des Abstandhalters (25; 26) größer oder gleich der Länge (L2) eines Abschnitts des Saugbandes (16) ist, welcher sich in der Stützebene (5) oberhalb derjenigen Förderfläche (13; 14) befindet, welcher dieser Abstandhalter (25; 26) zugeordnet ist.

4. Transporteinrichtung nach einem der vorstehenden Ansprüche, welche einen relativ zur Stützwand (4) bewegbaren Rückpositionierer (27; 28) enthält.

5. Transporteinrichtung nach einem der vorstehenden Ansprüche, in welcher sowohl in dem Bereich oberhalb der ersten Förderfläche (13) als auch in dem Bereich oberhalb der zweiten Förderfläche (14) jeweils ein Rückpositionierer (27; 28) angeordnet ist.

6. Transporteinrichtung nach einem der vorstehenden Ansprüche, in welcher der Abstandhalter (25; 26) und/oder der Rückpositionierer (27; 28) jeweils eine Rollenleiste (29) mit mehreren frei drehbar angeordneten Führungsrollen (30) umfasst.

7. Transporteinrichtung nach Anspruch 6, in welcher die Führungsrollen (30) der Rollenleiste (29) entlang einer geraden Linie angeordnet sind, welche parallel zur Stützebene (5) verläuft.

8. Transporteinrichtung nach Anspruch 6 oder 7, in welcher die Rollenleiste (29) quer zur Stützebene (5) verschiebbar ist.

9. Transporteinrichtung nach einem der Ansprüche 4 bis 8, in welcher der Rückpositionierer (27; 28), insbesondere dessen Führungsrollen (30), in einer Höhe zwischen der Saugfördereinrichtung (15) und der Förderfläche (13; 14) des jeweiligen Horizontalförderers (11; 12) angeordnet ist.

10. Verfahren zum unabhängigen Transportieren von zwei Glasscheiben (7, 8) in einer Scheibenbearbeitungsvorrichtung (1),
bei welchem eine erste Glasscheibe (7) leicht geneigt auf einem ersten Horizontalförderer (11) steht,
bei welchem eine zweite Glasscheibe (8) leicht geneigt auf einem zweiten Horizontalförderer (12) steht,
bei welchem die erste Glasscheibe (7) sich an einer Stützwand (4) abstützt und an eine Saugfördereinrichtung (15) angesaugt wird, welche sich in einem Bereich oberhalb des ersten Horizontalförderers (11) und in einem Bereich oberhalb des zweiten Horizontalförderers (12) erstreckt,
bei welchem die erste Glasscheibe (7) von der Saugfördereinrichtung (15) und dem ersten Horizontalförderers (11) gemeinsam mit einer ersten Geschwindigkeit entlang einer horizontalen Förderrichtung (B) linear transportiert wird, und
bei welchem die zweite Glasscheibe (8) von einem Abstandhalter (26) beabstandet zu der Saugfördereinrichtung (15) positioniert und dabei von dem zweiten Horizontalförderer (12) mit einer zweiten Geschwindigkeit entlang der Förderrichtung (B) linear transportiert wird.

11. Verfahren nach Anspruch 10, bei welchem der Abstandhalter (26) von der zweiten Glasscheibe (8) entfernt wird,
und bei welchem anschließend die zweite Glasscheibe (8) von einem Rückpositionierer (28) in die Stützebene (5), insbesondere an die Saugfördereinrichtung (15), zurückgeführt wird.
